# EUROPEAN PATENT SPECIFICATION

(11) **EP 2 200 391 B1**
(45) Date of publication and mention of the grant of the patent: **04.05.2011**
(21) Application number: 08305955.0
(22) Date of filing: 16.12.2008
(51) Int. Cl.: H04W 72/14

(54) **A method for allocation of resources to user terminals, a base station, a user terminal and a communication network therefore**
Verfahren zur Zuteilung von Ressourcen an Benutzerendgeräte, Basisstation, Benutzerendgerät und Kommunikationsnetz dafür
Procédé d'affectation de ressources à des terminaux utilisateurs, station de base, terminal utilisateur et réseau de communication correspondant

(43) Date of publication of application: 23.06.2010
(73) Proprietor: Alcatel Lucent, 75008 Paris (FR)
(72) Inventor: Aydin, Osman, 70569, Stuttgart (DE); Kaminski, Stefan, 73054, Eislingen (DE)
(74) Representative: Kleinbub, Oliver

(56) References cited:
- WO-A-03/030407
- WO-A-2007/028717
- US-A- 6 064 889
- US-A1- 2003 026 204
- EIKO SEIDEL: "Progress on LTE ADVANCED- the new 4G standard"[Online] 24 July 2008 (2008-07-24), XP002525538 Retrieved from the Internet: URL:http://www.nomor.de/uploads/_c/V1/_cV1 fTZl6MtFnAHVXltStg/LTEAdvanced_2008-07.pdf > [retrieved on 2009-04-27]

## Description

The invention relates to a method for allocation of resources to user terminals according to the preamble of claim 1, a base station according to the preamble of claim 9, a user terminal according to the preamble of claim 12 and a communication network according to the preamble of claim 15.

The overall functionality for radio transmission according to the standard Third Generation Partnership Project Long Term Evolution Advanced (3GPP LTE-Advanced) is currently under discussion. New ideas like the distribution of used resources for a transport block transmission to different parts of the spectrum, also in different component carriers, are currently discussed in 3GPP, as well as the possibility to have more than one transport block transmissions in the same time interval, e.g. within one subframe of 1ms. The pure possibilities are already discussed in 3GPP, however, the activation or deactivation principles for the new features were not yet treated in detail.

In LTE-Advanced (LTE-A), which is also referred to as Release10, or abbreviated Rel'10, one of the major requirements is that the backward compatibility to Long Term Evolution (LTE), which is also referred to as Release8, or abbreviated Rel'8, must be ensured. The new capabilities and features implemented in LTE-A thus have to be standardized in a way that the legacy equipment can be operated without any influence. Due to increased complexity and increased bandwidth capability, new Rel'10 features are supposed to consume more power than the Rel'8 features. Thus the flexibility for switching the Rel'10 features on and off shall be introduced in LTE-Advanced as well to be able to activate power saving.

From various technologies, the principle is known that functions of a new release are extended by standardizing new message formats, which are not understood by the legacy equipment and are thus ignored by legacy equipment, while devices that already have a functionality according to the new release will be able to read the new message formats and react accordingly.

A format within the context of the invention defines the number and ordering of bits in a message.

E.g., the format of a PDCCH grant defines the number and ordering of the information bits in the payload of a PDCCH grant. A PDCCH grant carries scheduling information for uplink and downlink transmissions. A PDCCH grant comprises information fields, such as a HARQ process identifier (HARQ = Hybrid Automatic Repeat Request), power information, a new data indicator and a redundancy version. Furthermore, the PDCCH grant informs a user terminal about the resource allocation of a radio transmission via either the downlink shared channel or the uplink shared channel. The information fields of a PDCCH grant are multiplexed according to various predefined schemes.

A method according to the prior art is disclosed in the paper " Progress on LTE ADVANCED - the new 4G standard" from Eiko Siedel, www.nomor.de/uploads/

The above described principle that functions of a new release are extended by standardizing new message formats, which are not understood by the legacy equipment and are thus ignored by legacy equipment, cannot be applied directly to resource grants sent on a Physical Downlink Control Channel (PDCCH) which tell a certain user terminal on which Physical Resource Blocks a Transport Block is actually transmitted in LTE-A, because the amount of information needed for a wider bandwidth, compared to transmission in LTE, is much larger. An LTE-A grant would thus need a completely new PDCCH format, which would cause that the existing Rel'8 scheme for the distribution of the PDCCHs to certain Control Channel Elements has to be changed.

There is furthermore a certain possibility that legacy equipment misinterprets parts of the Rel'10 PDCCH grants as being valid Rel'8 information.

Thus, the object of the invention is to design a signalling for features of a new standard release that is completely backward compatible to a legacy standard release.

This object is achieved by a method according to the teaching of claim 1, a base station according to the teaching of claim 9, a user terminal according to the teaching of claim 12 and a communication network according to the teaching of claim 15.

The main idea of the invention is that messages for allocation of resources to user terminals, which are sent from a base station to user terminals, have the same format for all modes, i.e. standard releases, in which the user terminals can operate, and that the user terminals interpret said messages for allocation of resources to the user terminals differently dependent on the mode in which they are operating.

In other words, by means of a reuse of an existing resource allocation format from a legacy standard release with a different interpretation for a new standard release, the new standard release is completely backward compatible to the legacy standard release.

Further developments of the invention can be gathered from the dependent claims and the following description.

In the following the invention will be explained further making reference to the attached drawings.
Fig. 1 schematically shows a cellular communication network in which the invention can be implemented.
Fig. 2 schematically shows the mapping of transport blocks on resource blocks on different component carriers.
Fig. 3 schematically shows an assignment of transport blocks to component carriers which is based on a user-individual transmission quality level.
Fig. 4 schematically shows a transmission of signalling and user data messages according to an embodiment of the invention.
Fig. 5 schematically shows a resource allocation using a common resource mapping function according to an embodiment of the invention.
Fig. 6 schematically shows a resource allocation using a resource mapping function which is specific for a component carrier according to an embodiment of the invention.

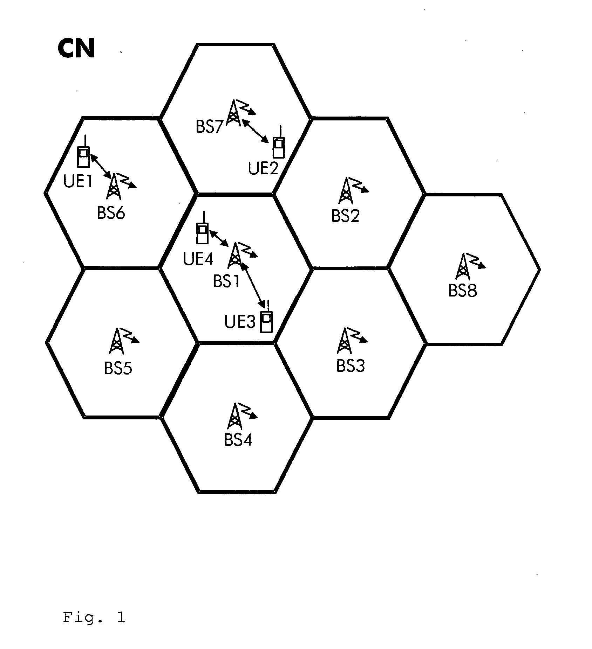

A communication network CN in which the invention can be implemented is depicted in fig. 1 and comprises user terminals UE1-UE4 and base stations BS1-BS8.

Each of said user terminals UE1-UE4 is connected to one or multiple of said base stations BS1-BS8, and the base stations BS1-BS8 are in turn connected to a core network which is not shown in fig. 1 for the sake of simplicity.

The user terminals UE1-UE4 comprise the functionality of a user terminal for transmission and reception in a communication network as e.g. an LTE-Advanced or a WIMAX network, i.e. they can be connected to a communication network by means of a base station.

Furthermore, a user terminal UE1-UE4 according to the invention comprises at least one processing means which is adapted to interpret messages for allocation of resources to the user terminal differently dependent on the mode, i.e. the standard release, in which the user terminal is operating.

The base stations BS1-BS8 comprise the functionality of a base station of a communication network as e.g. an LTE-Advanced or a WIMAX network, i.e. they serve the corresponding cells, and provide the possibility for user terminals UE1-UE4 to get connected to the communication network CN.

Furthermore, a base station BS1-BS8 according to the invention comprises at least one processing means which is adapted to send messages for allocation of resources to the user terminals which have the same format for the first mode and the further mode, i.e. for a legacy standard release and a new standard release.

A spectral band used for multi-cell radio transmission is normally called a carrier. In carrier aggregation scenarios, as e.g. for frequency division duplex (FDD), it is envisaged that the downlink transmission and the uplink transmission to and from a user terminal can happen over multiple consecutive or non-consecutive carriers, which are called component carriers.

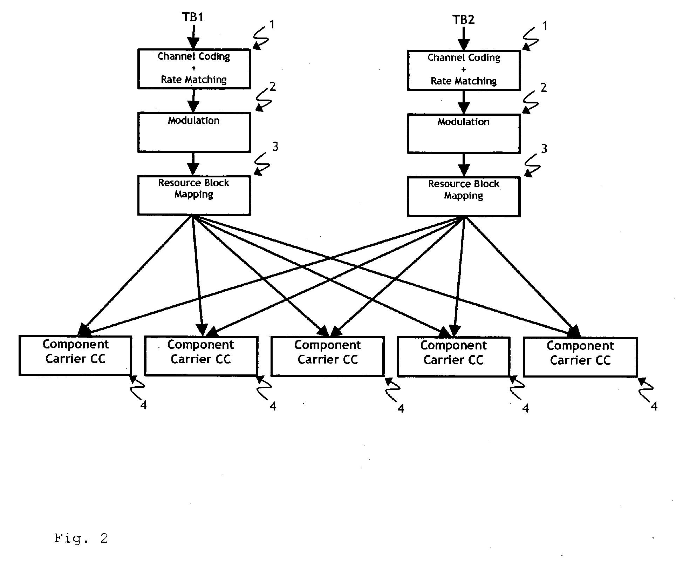

Fig. 2 shows the mapping of two transport blocks TB1, TB2 on resource blocks on different component carriers CC1-CC5 as currently discussed in 3GPP for the new standard LTE-A. Said mapping is performed in base stations, which are called enhanced NodeBs (eNBs) in LTE or LTE-A. In the new standard LTE-A, it is even intended to have more than one transport block transmitted in the same time interval.

In the first step 1, a channel coding and rate matching of data is performed specific for each transport block TB1 and TB2.

In the second step 2, a modulation of the data is performed which also is specific for each transport block TB1 and TB2.

As a consequence, there is for each transport block TB1 and TB2 a specific modulation and coding scheme (MCS).

In the third step 3, each transport block TB1, TB2 is specifically mapped on the different component carriers CC1-CC5.

In the fourth step 4, each component carrier CC1-CC5 is filled with data from both transport blocks TB1, TB2 for transmission over the air interface.

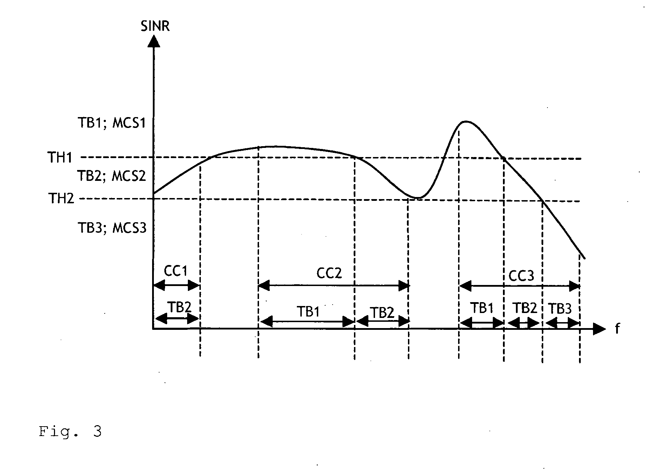

In fig. 3, the mapping of transmission blocks TB1-TB3 on component carriers CC1-CC3 is shown. Said mapping is dependent on the user-specific signal to interference and noise ratio SINR. If the SINR is low, only transport blocks TB3 with a modulation and coding scheme MCS3 which is very fault tolerant can be mapped to the component carriers CC1-CC3. If the SINR is in a medium range, only transport blocks TB2 with a modulation and coding scheme MCS2 which is relatively fault tolerant will be mapped to the component carriers CC1-CC3. Finally, if the SINR is high, only transport blocks TB1 with a modulation and coding scheme MCS1 which is not so fault tolerant will be mapped to the component carriers CC1-CC3.

The user-specific frequency-dependent signal to interference and noise ratio SINR is depicted by means of a curve along the frequency axis f.

Along the frequency axis f, the ranges of the 3 component carriers CC1-CC3 are depicted by double arrows.

Above a threshold TH1, which is depicted as a dotted line along an SINR axis, the transport block TB1 with the corresponding modulation and coding scheme MCS1 is mapped to the component carriers CC1-CC3.

Between a threshold TH2, which is also depicted as a dotted line along the SINR axis, and the threshold TH1, the transport block TB2 with the corresponding modulation and coding scheme MCS2 is mapped to the component carriers CC1-CC3.

Below the threshold TH2, the transport block TB3 is mapped to the component carriers CC1-CC3.

Which transport blocks TB1-TB3 are mapped on which component carriers CC1-CC3 is indicated by double arrows along the frequency axis f.

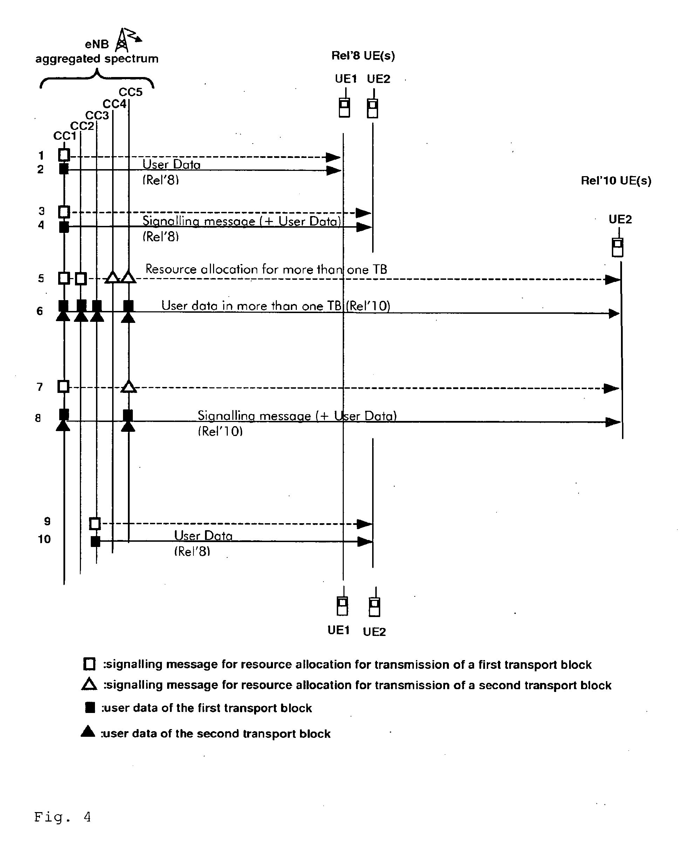

In Fig. 4, a transmission of signalling messages for allocation of resources and user data messages according to an embodiment of the invention between a base station eNB, which is called enhanced NodeB in LTE, and two user terminals UE1, UE2 is depicted.

The user terminal UE1 has only Rel'8 functionality, whereas the user terminal UE2 has both Rel'8 and Rel'10 functionality.

The frequency band used by the base station eNB for transmission and reception, also called aggregated spectrum, is divided into so-called component carriers CC1-CC5.

In general, signalling messages sent by the base station eNB are depicted as dotted arrows, and user data messages sent by the base station eNB are depicted as arrows with a solid line.

Signalling messages for resource allocation for transmission of a first transport block are indicated by a white square.

Signalling messages for resource allocation for transmission of a second transport block are indicated by a white triangle.

User data messages of the first data block are indicated by a black square.

User data messages of the second data block are indicated by a black triangle.

The squares and triangles are depicted on the component carriers CC1-CC5 depending on which carriers are used for the respective signalling or user data message.

Each user terminal UE1, UE2 starts to operate as a pure Rel'8 user terminal, regardless whether or not the user terminal has also Rel'10 capability.

In the first step 1, the base station eNB sends a signalling message on the component carrier CC1 to the user terminal UE1 for resource allocation for transmission of a transport block.

In the second step 2, the base station eNB sends a user data message to the user terminal UE1 in accordance with Rel'8 on the same component carrier CC1 as the signalling message.

In the third step 3, the base station eNB sends a signalling message on the component carrier CC1 to the user terminal UE2 for resource allocation for transmission of a first transport block.

In the fourth step 4, the base station eNB sends a user data message to the user terminal UE2 in accordance with Rel'8 on the same component carrier CC1 as the signalling message.

Additionally, in order to activate the Rel'10 functions of the user terminal UE2, the base station eNB sends a signalling message to the user terminal UE2. Then all completely Rel'8 backward compatible features remain usable, and all new Rel'10 features are activated additionally. The Rel'8 backward compatible transmissions can then also happen on component carriers different from the component carrier CC1 used before activation of the Rel'10 functions, as e.g. on component carrier CC2. Said signalling message to activate the Rel'10 functions can either be sent in the user data message, e.g. multiplexed in one transport block, or as a separate signalling message.

The signalling message can be sent via a radio resource control (RRC) Message in a transport block, a media access control (MAC) element in a MAC-header, or even a specific layer1 signalling, e.g. as a specific bit-combination of a grant.

The signalling message tells the user terminal UE2 to activate the Rel'10 functionalities, e.g. to listen to more than one component carrier simultaneously, to send feedback for said component carriers, or to send scheduling requests in a specific way. In the example depicted in fig. 4, the user terminal UE2 listens to the component carriers CC1, CC2, CC3, CC4 and CC5. However, generally a user terminal can also be told by a signalling message to listen only to a subset of all component carriers.

In the fifth step 5, the base station eNB sends a signalling message for resource allocation to the user terminal UE2 in accordance with Rel'10. The signalling message for resource allocation comprises on the component carriers CC1 and CC2 a signalling message for resource allocation for transmission of a first transport block, and on the component carriers CC4 and CC5 a signalling message for resource allocation for transmission of a second transport block.

Generally, all signalling messages for resource allocation, i.e. all PDCCH grants in the example in fig. 4, remain decodable according to Rel'8. All user terminals UE1, UE2, i.e. Rel'8 and Rel'10 user terminals recognize for which user terminal a PDCCH grant is valid. The interpretation of the content of a PDCCH grant is different for Rel'8 and Rel'10. In other words, the existing resource allocation format has a different interpretation for Rel'10 user terminals, e.g. by application of a user terminal specific resource mapping function.

In principle, according to Rel'10, one or more PDCCH grants on one or more component carriers are sent, which signal the transmission of one or more transport blocks. Each transport block is distributed over one or more component carriers.

In the sixth step 6, the base station eNB sends user data in two transport blocks which are both distributed over the component carriers CC1, CC2, CC3 and CC5.

In the seventh step 7, the base station eNB sends another signalling message for resource allocation to the user terminal UE2 in accordance with Rel'10. The signalling message for resource allocation comprises on the component carrier CC1 a signalling message for resource allocation for transmission of a first transport block, and on the component carrier CC5 a signalling message for resource allocation for transmission of a second transport block.

In the eighth step 8, the base station eNB sends user data in two transport blocks which are both distributed over the component carriers CC1 and CC5.

Additionally, in order to deactivate the Rel'10 functions of the user terminal UE2, the base station eNB sends a signalling message to the user terminal UE2. Then only the Rel'8 features remain usable, and all new Rel'10 features are deactivated. Said signalling message to deactivate the Rel'10 functions can either be sent in the user data message, e.g. multiplexed in one transport block, or as a separate signalling message.

The signalling message can be sent via a radio resource control (RRC) Message in a transport block, a media access control (MAC) element in a MAC-header, or even a specific layer1 signalling, e.g. as a specific bit-combination of a grant.

In an embodiment of the invention, the user terminal UE2 is switched back to the Rel'8 mode after a timer has elapsed, and no signalling message to deactivate the Rel'10 functions must be sent.

In an embodiment of the invention, the user terminal UE2 is switched back to the Rel'8 mode for power saving reasons. The user terminal UE2 can then e.g. perform in Rel'8 already specified so-called DRX cycles in which the user terminal UE2 does not receive anything but goes into sleep mode.

In the ninth step 9, the base station eNB sends a signalling message on the component carrier CC3 to the user terminal UE2 for resource allocation for transmission of a transport block.

In the tenth step 10, the base station eNB sends a user data message to the user terminal UE2 in accordance with Rel'8 on the same component carrier CC3 as the signalling message.

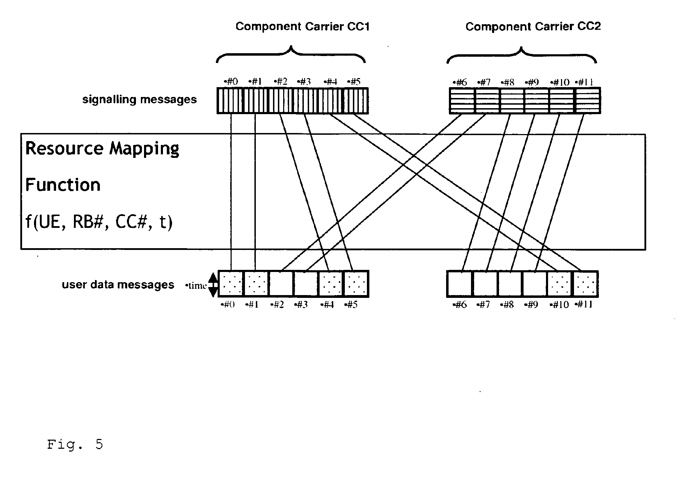

In fig. 5, a resource allocation e.g. according to Rel'10 is shown which uses a common resource mapping function according to an embodiment of the invention.

In the upper part of fig. 5, the physical resource blocks #0-#5 of the component carrier CC1, and the physical resource blocks #6-#11 of the component carrier CC2, which are indicated in a signalling message for resource allocation sent from a base station to a user terminal, are depicted. Such a signalling message could be e.g. a PDCCH grant according to LTE.

In the lower part of fig. 5, the physical resource blocks #0-#5 of the component carrier CC1, and the physical resource blocks #6-#11 of the component carrier CC2, which are used in a message comprising user data sent from a base station to a user terminal, are depicted. Such a message comprising user data could be e.g. a message on a physical downlink shared channel PDSCH according to LTE.

In each position representing a physical resource block within the signalling message for resource allocation, a certain bit combination or simply the appearance of a bit indicates that user data will be sent in a certain physical resource block.

The correlation of the indicated physical resource blocks in a signalling message with the physical resource blocks used for transmission of a message comprising user data is depicted in fig. 5 by solid lines. E.g., a certain bit combination or the appearance of a bit in the position for physical resource block #4 in the component carrier CC1 in the signalling message indicates, that user data will be sent in the physical resource block #10 in the component carrier CC2 in the message comprising user data.

According to Rel'8, physical resource blocks indicated in a signalling message are only from one component carrier and are only correlated to physical resource blocks used for the message comprising user data in the same component carrier.

According to Rel'10, physical resource blocks indicated in a signalling message are from one or more component carriers and are correlated to physical resource blocks used for the message comprising user data from one or more component carriers.

In order to be able to reuse the format of the signalling messages for Rel'10, a bit combination or the appearance of a bit indicating a physical resource block in a signalling message will be interpreted differently dependent on if the user terminal is in Rel'8 mode or in Rel'10 mode. E.g., a certain bit combination or the appearance of a bit in the position indicating physical resource block #4 in the component carrier CC1 in the signalling message may indicate, that user data will be sent in the physical resource block #4 in the component carrier CC1 in the message comprising user data if the user terminal is in Rel'8 mode, whereas the same certain bit combination or the appearance of the same bit in the position indicating physical resource block #4 in the component carrier CC1 in the signalling message indicates, that user data will be sent in the physical resource block #10 in the component carrier CC2 in the message comprising user data.

In an embodiment of the invention, user terminals interpret signalling messages for allocation of resources by means of resource mapping functions which are specific for each user terminal and which map physical resource blocks of said messages for allocation of resources to physical resource blocks used for user data transmission.

In fig. 5, a resource mapping function is schematically depicted as a box between the signalling message and the user data message. The resource mapping function allows to send the same resource assignment format, e.g. the same amount of bits or the same location of bits, as specified for Rel'8, but with a different meaning for Rel'10. The resource mapping functions are implemented in the Rel'10 user terminals, i.e. each Rel'10 user terminal knows its respective resource mapping functions.

In an embodiment of the invention, resource mapping functions may be time dependent, i.e. the resource mapping functions may be changed at any time.

In another embodiment of the invention, resource mapping functions may be valid during one or more certain time intervals. Thus, so-called persistent scheduling in analogy to Rel'8 is possible.

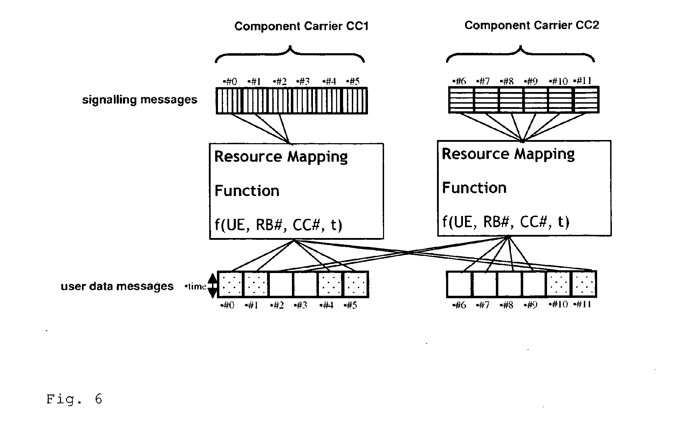

In fig. 6, a resource allocation e.g. according to Rel'10 is shown which uses resource mapping functions which are specific for a certain component carrier according to an embodiment of the invention.

The resource allocation depicted in fig. 6 is similar to the one depicted in fig. 5 with the difference, that two resource mapping functions instead of one common resource mapping function are used. The first resource mapping function is specific for signalling messages with physical resource blocks of the first component carrier CC1, and the second resource mapping function is specific for signalling messages with physical resource blocks of the second component carrier CC2. However, generally, the resource mapping functions need not to be restricted to one or several component carriers.

The usage of more than one resource mapping function allows e.g. to have different granularities for the signalling. In fig. 6 e.g., the resource mapping function for the first component carrier CC1 maps one physical resource block of a signalling message to two physical resource blocks of a message comprising user data, whereas the resource mapping function for the second component carrier CC2 maps one physical resource block of a signalling message to one physical resource block of a message comprising user data.

Furthermore, the usage of more than one resource mapping function offers a higher number of mapping possibilities, as each physical resource block indicated in a signalling message can be mapped differently in each resource mapping function.

In an embodiment of the invention, a base station sends information about resource mapping functions to user terminals which are specific for each user terminal and which map physical resource blocks of messages for allocation of resources to physical resource blocks used for user data transmission.

Alternatively, the resource mapping functions may be predefined in the user terminals.

## Claims

1. A method for allocation of resources to user terminals (UE1, UE2) operating in a first mode which can be adjusted by all user terminals (UE1, UE2) or in a further mode which can be adjusted only by a part of the user terminals (UE2), **characterized in that**
• base stations (eNB) send messages for allocation of resources to the user terminals (UE1, UE2) which have the same format for the first mode and the further mode,
• and the user terminals (UE1, UE2) interpret said messages for allocation of resources to the user terminals (UE1, UE2) differently dependent on the mode in which they are operating.

2. A method according to claim 1, **characterized in, that**
• the user terminals (UE1, UE2) operate as default in the first mode,
• and at least one signalling message is used to switch at least one of said user terminals (UE2) to the further mode.

3. A method according to claim 2, **characterized in, that** at least one further signalling message is used to switch back the at least one of said user terminals (UE2) to the first mode.

4. A method according to claim 2, **characterized in, that** the at least one of said user terminals (UE2) is switched back to the first mode after a timer has elapsed.

5. A method according to claim 1, **characterized in, that** the user terminals (UE2) interpret said messages for allocation of resources by means of resource mapping functions which are specific for each user terminal (UE2) and which map physical resource blocks of said messages for allocation of resources to physical resource blocks used for user data transmission.

6. A method according to claim 5, **characterized in, that** user data from at least one transport block are distributed to said physical resource blocks used for user data transmission.

7. A method according to claim 5, **characterized in, that** said physical resource blocks used for user data transmission are distributed over at least one component carrier.

8. A method according to claim 5, **characterized in, that** said resource mapping functions are time dependent or component carrier dependent.

9. A base station (eNB) for allocation of resources to user terminals (UE1, UE2) operating in a first mode which can be adjusted by all user terminals (UE1, UE2) or in a further mode which can be adjusted only by a part of the user terminals (UE2) **characterized in that** the base station (eNB) comprises at least one processing means which is adapted to send messages for allocation of resources to the user terminals (UE1, UE2) which have the same format for the first mode and the further mode.

10. A base station (eNB) according to claim 9, **characterized in, that** said at least one processing means is adapted to send signalling messages for switching at least one of said user terminals (UE1, UE2) to the further mode.

11. A base station (eNB) according to claim 9, **characterized in, that** said at least one processing means is adapted to send messages to the user terminals (UE1, UE2) which comprise information about resource mapping functions which are specific for each user terminal (UE1, UE2) and which map physical resource blocks of said messages for allocation of resources to physical resource blocks used for user data transmission.

12. A user terminal (UE2) operating in a first mode which can be adjusted by all user terminals (UE1, UE2) or in a further mode which can be adjusted only by a part of the user terminals (UE2) **characterized in that** said user terminal (UE2) comprises at least one processing means which is adapted to interpret messages for allocation of resources to the user terminal (UE2) differently dependent on the mode in which the user terminal (UE2) is operating.

13. A user terminal (UE2) according to claim 12, **characterized in, that** the user terminal (UE2) operates as default in the first mode, and at least one signalling message is used to switch the user terminal (UE2) to the further mode.

14. A user terminal (UE2) according to claim 12, **characterized in, that** the at least one processing means is adapted to interpret said messages for allocation of resources by means of at least one resource mapping function which is specific for each user terminal and which maps physical resource blocks of said messages for allocation of resources to physical resource blocks used for user data transmission.

15. A communication network (CN) comprising user terminals (UE2) and base stations (eNB) for allocation of resources to the user terminals operating in a first mode which can be adjusted by all user terminals (UE1, UE2) or in a further mode which can be adjusted only by a part of the user terminals (UE2) **characterized in that**
• the base stations (eNB) comprise at least one processing means which is adapted to send messages for allocation of resources to the user terminals (UE1, UE2) which have the same format for the first mode and the further mode,
• and the user terminals (UE1, UE2) comprise at least one processing means which is adapted to interpret said messages for allocation of resources to the user terminals (UE1, UE2) differently dependent on the mode in which the user terminals (UE1, UE2) are operating.

## Patentansprüche

1. Verfahren zur Zuteilung von Ressourcen an Benutzerendgeräte (UE1, UE2), welche in einem ersten Modus, der von allen Benutzerendgeräten (UE1, UE2) angepasst werden kann, oder in einem weiteren Modus, der nur von einem Teil der Benutzerendgerät (UE2) angepasst werden kann, arbeiten, **dadurch gekennzeichnet, dass**
• Basisstationen (eNB) Nachrichten für die Zuteilung von Ressourcen an diejenigen Benutzerendgeräte (UE1, UE2) senden, welche dasselbe Format für den ersten Modus und den weiteren Modus haben,
• und die Benutzerendgeräte (UE1, UE2) die besagten Nachrichten für die Zuteilung von Ressourcen an die Benutzerendgerät (UE1, UE2) je nach dem Modus, in dem sie arbeiten, unterschiedlich auslegen.

2. Verfahren nach Anspruch 1, **dadurch gekennzeichnet, dass**
• die Benutzerendgeräte (UE1, UE2) als Standardeinstellung im ersten Modus arbeiten,
• und mindestens eine Signalisierungsnachricht verwendet wird, um mindestens eines der besagten Benutzerendgeräte (UE2) in den weiteren Modus zu schalten.

3. Verfahren nach Anspruch 2, **dadurch gekennzeichnet, dass** die besagte mindestens eine Signalisierungsnachricht verwendet wird, um das mindestens eine der besagten Benutzerendgeräte (UE2) in den ersten Modus zurückzuschalten.

4. Verfahren nach Anspruch 2, **dadurch gekennzeichnet, dass** das mindestens eine der besagten Benutzerendgeräte (UE2) nach Ablauf eines Timers in den ersten Modus zurückgeschaltet wird.

5. Verfahren nach Anspruch 1, **dadurch gekennzeichnet, dass** die Benutzerendgeräte (UE2) die besagten Nachrichten für die Zuteilung von Ressourcen anhand von Ressourcenabbildungsfunktionen, welche für jedes Benutzerendgerät (UE2) spezifisch sind und physische Ressourcenblöcke der besagten Nachrichten für die Zuteilung von Ressourcen auf für die Übertragung von Benutzerdaten verwendete physische Ressourcenblöcke abbilden, auslegen.

6. Verfahren nach Anspruch 5, **dadurch gekennzeichnet, dass** Benutzerdaten aus mindestens einem Transportblock an die besagten für die Übertragung von Benutzerdaten verwendeten physischen Ressourcenblöcke verteilt werden.

7. Verfahren nach Anspruch 5, **dadurch gekennzeichnet, dass** die besagten für die Übertragung von Benutzerdaten verwendeten physischen Ressourcenblöcke über mindestens einen Komponententräger verteilt werden.

8. Verfahren nach Anspruch 5, **dadurch gekennzeichnet, dass** die besagten Ressourcenabbildungsfunktionen zeitabhängig oder komponententrägerabhängig sind.

9. Basisstation (eNB) für die Zuteilung von Ressourcen an Benutzerendgeräte (UE1, UE2), welche in einem ersten Modus, der von allen Benutzerendgeräten (UE1, UE2) angepasst werden kann, oder in einem weiteren Modus, der nur von einem Teil der Benutzerendgeräte (UE2) angepasst werden kann, arbeiten, **dadurch gekennzeichnet, dass** die Basisstation (eNB) mindestens ein Verarbeitungsmittel umfasst, welches dazu ausgelegt ist, Nachrichten für die Zuteilung von Ressourcen an diejenigen Benutzerendgeräte (UE1, UE2), die dasselbe Format für den ersten Modus und den weiteren Modus haben, zu senden.

10. Basisstation (eNB) nach Anspruch 9, **dadurch gekennzeichnet, dass** mindestens ein Verarbeitungsmittel dazu ausgelegt ist, Signalisierungsnachrichten für das Schalten mindestens eines der besagten Benutzerendgeräte (UE1, UE2) in den weiteren Modus zu senden.

11. Basisstation (eNB) nach Anspruch 9, **dadurch gekennzeichnet, dass** das besagte mindestens eine Verarbeitungsmittel dazu ausgelegt ist, Nachrichten an die Benutzerendgeräte (UE1, UE2) zu senden, welche Informationen über Ressourcenabbildungsfunktionen, die für jedes Benutzerendgerät (UE1, UE2) spezifisch sind und physische Ressourcenblöcke der besagten Nachrichten für die Zuteilung von Ressourcen auf für die Übertragung von Benutzerdaten verwendete physische Ressourcenblöcke abbilden, enthalten.

12. Benutzerendgerät (UE2), welches in einem ersten Modus, der von allen Benutzerendgeräten (UE1, UE2) angepasst werden kann, oder in einem weiteren Modus, der nur von einem Teil der Benutzerendgeräte (UE2) angepasst werden kann, arbeitet, **dadurch gekennzeichnet, dass** das besagte Benutzerendgerät (UE2) mindestens ein Verarbeitungsmittel umfasst, welches dazu ausgelegt ist, Nachrichten für die Zuteilung von Ressourcen an das Benutzerendgerät (UE2) je nach dem Modus, in welchem das Benutzerendgerät (UE2) arbeitet, unterschiedlich auszulegen.

13. Benutzerendgerät (UE2) nach Anspruch 12, **dadurch gekennzeichnet, dass** das Benutzerendgerät (UE2) als Standardeinstellung im ersten Modus arbeitet, und mindestens eine Signalisierungsnachricht verwendet wird, um das Benutzerendgerät (UE2) in den weiteren Modus zu schalten.

14. Benutzerendgerät (UE2) nach Anspruch 12, **dadurch gekennzeichnet, dass** das mindestens eine Verarbeitungsmittel dazu ausgelegt ist, die besagten Nachrichten für die Zuteilung von Ressourcen anhand mindestens einer Ressourcenabbildungsfunktion, welche für jedes Benutzerendgerät spezifisch ist und physische Ressourcenblöcke der besagten Nachrichten für die Zuteilung von Ressourcen auf für die Übertragung von Benutzerdaten verwendete physische Ressourcenblöcke abbildet, auszulegen.

15. Kommunikationsnetzwerk (CN) mit Benutzerendgeräten (UE2) und Basisstationen (eNB) für die Zuteilung von Ressourcen an die Benutzerendgeräte, welcher in einem ersten Modus, der von allen Benutzerendgeräten (UE1, UE2) angepasst werden kann, oder in einem weiteren Modus, der nur von einem Teil der Benutzerendgeräte (UE2) angepasst werden kann, arbeiten, **dadurch gekennzeichnet, dass**
• die Basisstationen (eNB) mindestens ein Verarbeitungsmittel umfassen, welches dazu ausgelegt ist, Nachrichten für die Zuteilung von Ressourcen an diejenigen Benutzerendgeräte (UE1, UE2), die dasselbe Format für den ersten Modus und den weiteren Modus haben, zu senden,
• und die Benutzerendgeräte (UE1, UE2) mindestens ein Verarbeitungsmittel umfassen, welches dazu ausgelegt ist, die besagten Nachrichten für die Zuteilung von Ressourcen an die Benutzerendgeräte (UE1, UE2) je nach dem Modus, in welchem die Benutzerendgeräte (UE1, UE2) arbeiten, unterschiedlich auszulegen.

## Revendications

1. Procédé d'affectation de ressources à des terminaux utilisateurs (UE1, UE2) fonctionnant dans un premier mode qui peut être ajusté par tous les terminaux utilisateurs (UE1, UE2) ou dans un autre mode qui ne peut être ajusté que par une partie des terminaux utilisateurs (UE2), **caractérisé en ce que**
• des stations de base (eNB) envoient des messages pour l'affectation de ressources aux terminaux utilisateurs (UE1, UE2) qui ont le même format pour le premier mode et pour l'autre mode,
• et les terminaux utilisateurs (UE1, UE2) interprètent lesdits messages pour l'affectation de ressources aux terminaux utilisateurs (UE1, UE2) de manière différente selon le mode dans lequel ils fonctionnent.

2. Procédé selon la revendication 1, **caractérisé en ce que**
• les terminaux utilisateurs (UE1, UE2) fonctionnent par défaut dans le premier mode,
• et au moins un message de signalisation est utilisé pour faire passer au moins un desdits terminaux utilisateurs (UE2) dans l'autre mode.

3. Procédé selon la revendication 2, **caractérisé en ce que** au moins un autre message de signalisation est utilisé pour faire revenir l'au moins un desdits terminaux utilisateurs (UE2) dans le premier mode.

4. Procédé selon la revendication 2, **caractérisé en ce que** l'au moins un desdits terminaux utilisateurs (UE2) revient dans le premier mode après que la durée comptée par un minuteur s'est écoulée.

5. Procédé selon la revendication 1, **caractérisé en ce que** les terminaux utilisateurs (UE2) interprètent lesdits messages pour l'affectation de ressources au moyen de fonctions de mise en correspondance de ressources qui sont spécifiques de chaque terminal utilisateur (UE2) et qui mettent en correspondance des blocs de ressources physiques desdits messages pour l'affectation de ressources avec des blocs de ressources physiques utilisés pour la transmission de données d'utilisateur.

6. Procédé selon la revendication 5, **caractérisé en ce que** des données d'utilisateur provenant d'au moins un bloc de transport sont distribuées auxdits blocs de ressources physiques utilisés pour la transmission de données d'utilisateur.

7. Procédé selon la revendication 5, **caractérisé en ce que** lesdits blocs de ressources physiques utilisés pour la transmission de données d'utilisateur sont distribués sur au moins une porteuse composante.

8. Procédé selon la revendication 5, **caractérisé en ce que** lesdites fonctions de mise en correspondance de ressources dépendent du temps ou dépendent de la porteuse composante.

9. Station de base (eNB) pour l'affectation de ressources à des terminaux utilisateurs (UE1, UE2) fonctionnant dans un premier mode qui peut être ajusté par tous les terminaux utilisateurs (UE1, UE2) ou dans un autre mode qui ne peut être ajusté que par une partie des terminaux utilisateurs (UE2) **caractérisée en ce que** la station de base (eNB) comprend au moins un moyen de traitement qui est adapté pour envoyer des messages pour l'affectation de ressources aux terminaux utilisateurs (UE1, UE2) qui ont le même format pour le premier mode et pour l'autre mode.

10. Station de base (eNB) selon la revendication 9, **caractérisée en ce que** ledit au moins un moyen de traitement est adapté pour envoyer des messages de signalisation pour faire passer au moins un desdits terminaux utilisateurs (UE1, UE2) dans l'autre mode.

11. Station de base (eNB) selon la revendication 9, **caractérisé en ce que** ledit au moins un moyen de traitement est adapté pour envoyer des messages aux terminaux utilisateurs (UE1, UE2) qui comprennent des informations sur les fonctions de mise en correspondance de ressources qui sont spécifiques de chaque terminal utilisateur (UE1, UE2) et qui mettent en correspondance des blocs de ressources physiques desdits messages pour l'affectation de ressources avec des blocs de ressources physiques utilisés pour la transmission de données d'utilisateur.

12. Terminal utilisateur (UE2) fonctionnant dans un premier mode qui peut être ajusté par tous les terminaux utilisateurs (UE1, UE2) ou dans un autre mode qui ne peut être ajusté que par une partie des terminaux utilisateurs (UE2) **caractérisé en ce que** ledit terminal utilisateur (UE2) comprend au moins un moyen de traitement qui est adapté pour interpréter des messages pour l'affectation de ressources au terminal utilisateur (UE2) de manière différente selon le mode dans lequel le terminal utilisateur (UE2) fonctionne.

13. Terminal utilisateur (UE2) selon la revendication 12, **caractérisé en ce que** le terminal utilisateur (UE2) fonctionne par défaut dans le premier mode, et au moins un message de signalisation est utilisé pour faire passer le terminal utilisateur (UE2) dans l'autre mode.

14. Terminal utilisateur (UE2) selon la revendication 12, **caractérisé en ce que** l'au moins un moyen de traitement est adapté pour interpréter lesdits messages pour l'affectation de ressources au moyen d'au moins une fonction de mise en correspondance de ressources qui est spécifique de chaque terminal utilisateur et qui met en correspondance des blocs de ressources physiques desdits messages pour l'affectation de ressources avec des blocs de ressources physiques utilisés pour la transmission de données d'utilisateur.

15. Réseau de communication (CN) comprenant des terminaux utilisateurs (UE2) et des stations de base (eNB) pour l'affectation de ressources aux terminaux utilisateurs fonctionnant dans un premier mode qui peut être ajusté par tous les terminaux utilisateurs (UE1, UE2) ou dans un autre mode qui ne peut être ajusté que par une partie des terminaux utilisateurs (UE2) **caractérisé en ce que**
• les stations de base (eNB) comprennent au moins un moyen de traitement qui est adapté pour envoyer des messages pour l'affectation de ressources aux terminaux utilisateurs (UE1, UE2) qui ont le même format pour le premier mode et pour l'autre mode,
• et les terminaux utilisateurs (UE1, UE2) comprennent au moins un moyen de traitement qui est adapté pour interpréter lesdits messages pour l'affectation de ressources aux terminaux utilisateurs (UE1, UE2) de manière différente selon le mode dans lequel les terminaux utilisateurs (UE1, UE2) fonctionnent.
